# EUROPEAN PATENT APPLICATION

(11) **EP 4 799 917 A1**
(43) Date of publication of application: **02.09.2026**
(21) Application number: 24833173.8
(22) Date of filing: 23.07.2024
(51) Int. Cl.: B63B 35/44, B63B 73/10, B63B 73/20, B63B 73/40

(54) **FLOATING FOUNDATION AND METHOD FOR ASSEMBLING FLOATING WIND TURBINE**

(30) Priority: 23.10.2023 CN 202311378529
(71) Applicant: Huaneng Clean Energy Research Institute, Beijing 102209 (CN)
(72) Inventor: ZHOU, Yiming, Beijing 102209 (CN); LI, Weidong, Beijing 102209 (CN); LIU, Xin, Beijing 102209 (CN); CHEN, Jianjun, Beijing 102209 (CN)
(74) Representative: Metida
(86) International application number: PCT/CN2024/107036
(87) International publication number: WO 2025/086750

(57) **Abstract**

A floating foundation is provided and includes a plurality of foundation modules. The plurality of foundation modules are spliced and connected, and the foundation modules at least include a first foundation module extending in a first direction, a second foundation module extending in a second direction and a third foundation module extending in a third direction after the plurality of foundation modules being spliced, where the second foundation module and the third foundation module are located in a same plane, and a plane of the first foundation module is higher than planes of the second foundation module and the third foundation module being located. The first direction, the second direction and the third direction form a three-dimensional coordinate system. In addition, the disclosure also provides a method for assembling the floating fan.

## Description

### TECHNICAL FIELD

The disclosure relates to the technical field of offshore wind power, in particular to a floating foundation and a method for assembling a floating fan.

### BACKGROUND

Because offshore wind power is usually closer to the energy consumption center and the wind resources are better than onshore wind power, offshore wind power develops rapidly. However, due to the limited offshore development resources, strong ecological constraints, large demand for other economic activities and scattered sites, offshore wind power has developed to the deep sea.

Compared with nearshore wind power, the deep sea area has the advantages of better wind resources, huge development potential and less restrictive factors. With offshore wind power moving from shallow offshore to deep offshore, the foundation forms have gradually evolved into jacket foundation and floating foundation from gravity, multipod, high pile cap and single pile.

At present, the main design and technology of floating foundation are mostly designed to be manufactured and installed at the dock of shipyard. However, the floating foundation structure is complex, so it takes 3-6 months to install, which costs a lot of time and manpower and material resources.

Therefore, how to realize the rapid installation of floating foundation to reduce the cost is a technical problem that needs to be solved urgently by those skilled in the art.

### SUMMARY

In view of this, the disclosure provides a floating foundation, which realizes the rapid installation of the floating foundation and reduces the cost. In addition, the disclosure also provides a method for assembling a floating fan by applying the floating foundation.

In order to achieve the above purpose, the disclosure provides the following technical scheme:
a floating foundation includes a plurality of foundation modules, where the plurality of foundation modules are spliced and connected, and the foundation modules at least include a first foundation module extending in a first direction, a second foundation module extending in a second direction and a third foundation module extending in a third direction after the plurality of foundation modules being spliced, where the second foundation module and the third foundation module are located in a same plane, and a plane of the first foundation module is higher than planes of the second foundation module and the third foundation module being located;
the first direction, the second direction and the third direction form a three-dimensional coordinate system.

Preferably, in the floating foundation, a middle of the second foundation module and one end of the third foundation module are connected into a T-shaped structure, and both ends of the second foundation module and an other end of the third foundation module are provided with the first foundation module.

Preferably, in the floating foundation, it further includes a floating plate used for being detachably connected with the foundation modules.

Preferably, in the floating foundation, the floating plate is connected above the foundation modules,
or, the floating plate is connected below the foundation modules.

Preferably, in the floating foundation, after one of the floating plate and the foundation modules is filled with water, the floating plate is separated from the foundation modules.

A method for assembling a floating fan, applying the floating foundation, the method includes:
transporting foundation modules, where the foundation modules at least includes a first foundation module, a second foundation module and a third foundation module, and the foundation modules are transported from a production workshop to an installation dock;
splicing the foundation modules, splicing the foundation modules transported to the installation dock, where the first foundation module is arranged in a first direction, the second foundation module is arranged in a second direction, and the third foundation module is arranged in a third direction;
installing a floating plate, where the floating plate is detachably installed on spliced foundation modules;
installing a fan assembly, and installing the fan assembly on the foundation modules to obtain a floating fan with the floating plate;
transporting the floating fan with the floating plate, and transporting the floating fan with the floating plate to an offshore fan installation site;
disassembling the floating plate and adjusting weights of the foundation modules to obtain required ballast value;
installing a mooring system to obtain the floating fan.

Preferably, in the above method for assembling the floating fan, the installing a floating plate includes:
the floating plate is detachably installed above the spliced foundation modules.

Preferably, in the above method for assembling the floating fan, the disassembling the floating plate includes:
injecting water into the foundation modules until the floating plate is separated from the foundation modules.

Preferably, in the above method for assembling the floating fan, the installing floating plate includes:
the floating plate is detachably installed below the spliced foundation modules.

Preferably, in the above method for assembling the floating fan, the disassembling the floating plate includes:
injecting water into the floating plate until the floating plate is separated from the foundation modules.

The disclosure provides the floating foundation. The floating foundation is modularized, and optionally, at least three foundation modules are provided. When the floating foundation is installed, the foundation modules can be spliced together, thus realizing the rapid assembly of the floating foundation.

### BRIEF DESCRIPTION OF THE DRAWINGS

In order to more clearly explain the embodiments of the disclosure or the technical scheme in the prior art, the drawings needed to be used in the description of the embodiments or the prior art will be briefly introduced below. Obviously, the drawings in the following description are only some embodiments of the disclosure, and other drawings can be obtained according to these drawings without creative work for ordinary skilled in the field.
FIG. 1 is a schematic structural diagram of foundation modules of a floating foundation according to an embodiment of the disclosure;
FIG. 2 is a schematic structural diagram of a floating fan according to an embodiment of the disclosure;
FIG. 3 is a schematic structural diagram of the floating fan when the floating plate is located below according to an embodiment of the disclosure;
FIG. 4 is a schematic structural diagram of the floating fan in another direction when the floating plate is located below according to an embodiment of the disclosure;
FIG. 5 is a schematic structural diagram of the floating fan when the floating plate is located above according to an embodiment of the disclosure;
FIG. 6 is a schematic structural diagram of the floating fan in another direction when the floating plate is located above according to an embodiment of the disclosure;
FIG. 7 is a process diagram of a method for assembling a floating fan according to an embodiment of the disclosure; and
FIG. 8 is a flowchart of a method for assembling a floating fan according to an embodiment of the disclosure.

### DETAILED DESCRIPTION OF THE EMBODIMENTS

The disclosure discloses a floating foundation, which realizes the rapid installation of the floating foundation to reduce the cost. In addition, the disclosure also provides a method for assembling a floating fan by applying the floating foundation.

In the following, the technical scheme in the embodiment of the disclosure will be clearly and completely described with reference to the attached drawings in the embodiment of the disclosure. Obviously, the described embodiment is only a part of the embodiment of the disclosure, but not all of embodiments. Based on the embodiments in the disclosure, all other embodiments obtained by ordinary skilled in the field without creative labor belong to the scope of protection of the disclosure.

Hereinafter, the terms "first" and "second" are only used for descriptive purposes, and cannot be understood as indicating or implying relative importance or implicitly indicating the number of indicated technical features. Therefore, the features defined as "first" and "second" may include one or more of these features explicitly or implicitly.

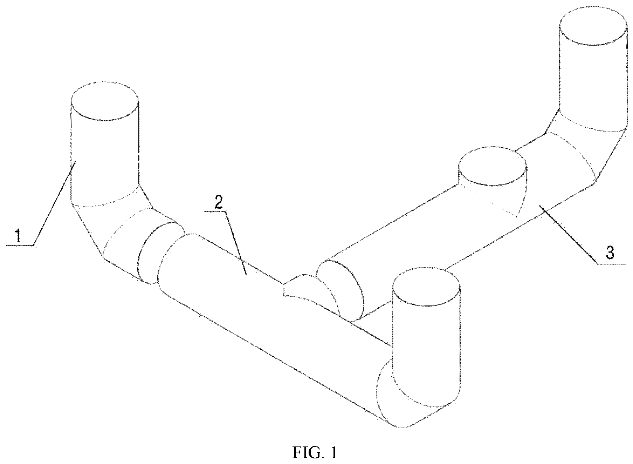

As shown in FIG. 1, the floating foundation provided in the embodiment of the disclosure includes a plurality of foundation modules. The plurality of foundation modules are spliced and connected, and the foundation modules at least include a first foundation module 1 extending in a first direction, a second foundation module 2 extending in a second direction and a third foundation module 3 extending in a third direction after the plurality of foundation modules being spliced. The second foundation module 2 and the third foundation module 3 are located in a same plane, and a plane of the first foundation module 1 is higher than planes of the second foundation module 2 and the third foundation module 3 being located. The first direction, the second direction and the third direction form a three-dimensional coordinate system.

In some embodiments, the second foundation module 2 and the third foundation module 3 may both be circular tubes with connecting ends, and the first foundation module 1 may be an elbow tube. The middle of the second foundation module 2 is connected with one end of the third foundation module 3 in a T-shape, and then the two ends of the second foundation module 2 and the other end of the third foundation module 3 are respectively connected with the first foundation module 1.

In order to simplify the installation, a first foundation module 1 may be pre-installed at the other ends of the second foundation module 2 and the third foundation module 3, respectively.

The third foundation module 3 and the second foundation module 2 are located in the same plane, while a plane of the first foundation module 1 is higher than the plane where the third foundation module 3 and the second foundation module 2 are located. When the floating foundations are placed on the sea surface, both the second foundation module 2 and the third foundation module 3 will be located below the sea surface, thus increasing the buoyancy of the floating foundation and reducing the diameters of the second foundation module 2 and the third foundation module 3, that is, reducing the material consumption.

In the disclosure, the floating foundation is modularized, and optionally, at least three foundation modules are provided, so that when the floating foundation is installed, the foundation modules can be spliced together, thereby realizing the rapid assembly of the floating foundation.

The foundation module can be manufactured in the onshore tower factory, and then transported to the dock by boat, truck, etc. when the fan needs to be installed, so as to complete the overall installation, and the overall occupation time of the dock can be shortened to 2 weeks, greatly reducing the dock rental fee.

In some embodiments, when the foundation modules are spliced, flange connection can be adopted, and it is ensured that the first foundation module 1 is arranged in the first direction, the second foundation module 2 is arranged in the second direction and the third foundation module 3 is arranged in the third direction. Of course, the foundation modules can also be assembled by other connection methods, such as welding.

The number and shape of the first foundation module 1, the second foundation module 2 and the third foundation module 3 can be set according to different needs. The core of this disclosure is that the floating type foundation is modularized and transported to the dock for splicing after processing in the workshop, which can effectively shorten the installation period of the floating foundation, thus reducing the production cost.

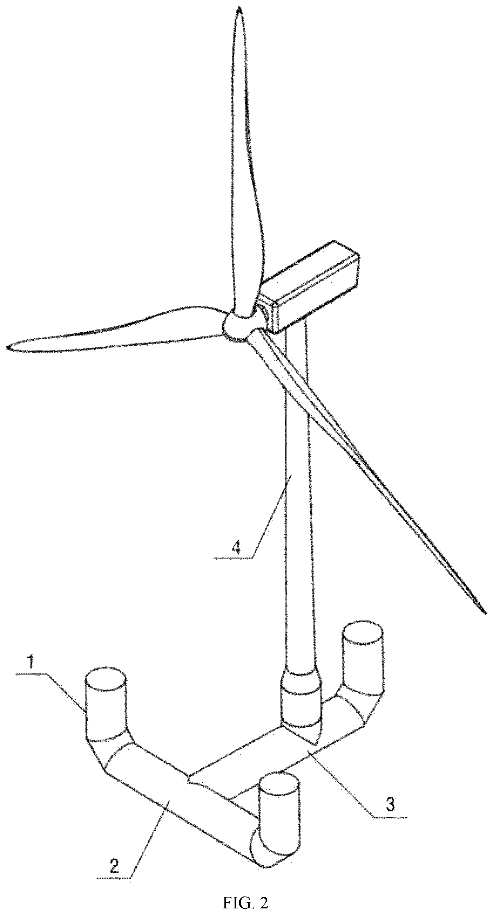

As shown in connection with FIG. 2, the fan assembly is installed on the third foundation module 3, so that the center of gravity of the fan assembly relative to the sea surface can be reduced. In addition, the fan assembly 4 can also be installed on the first foundation module 1. If the fan assembly 4 is installed on the first foundation module 1, the weight of the foundation module can be increased to reduce the position of the center of gravity of the fan assembly 4 relative to the sea surface and ensure the stability of the fan assembly 4.

Because the fan assembly 4 has a certain weight, after the foundation module is assembled at the dock, the water level at the dock is low. After the fan assembly 4 is installed at the foundation modules, the foundation modules may touch the bottom at the current draft. In order to reduce the draft of the foundation module with the fan assembly 4 installed at the dock and prevent the problem of touching the bottom, it is necessary to increase the buoyancy of the foundation module.

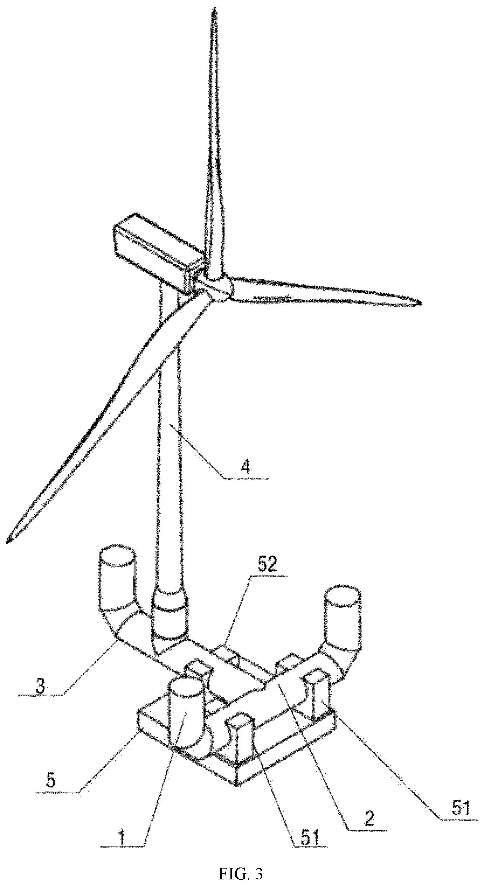

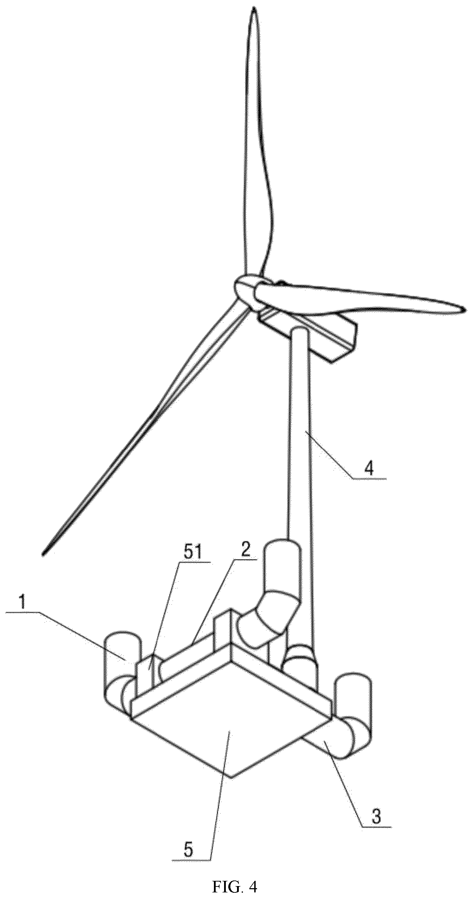

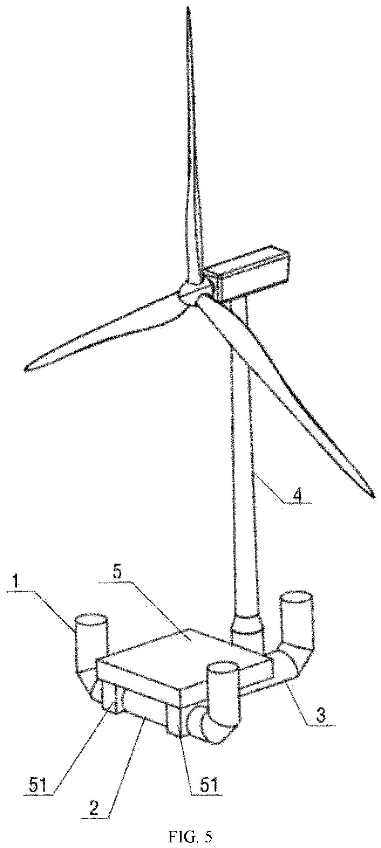

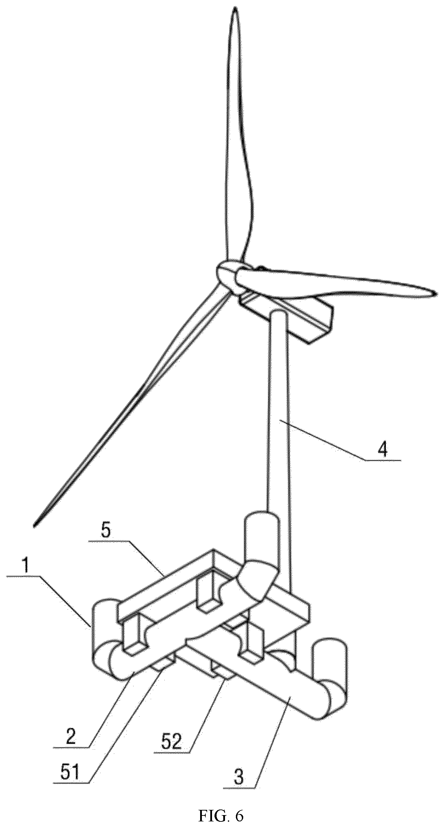

However, when the foundation module with the fan is placed in the deep sea, the depth of the sea surface is large, so there is no need for great buoyancy. As shown in FIGs. 3 to 6, based on this, the floating foundation disclosed in the embodiment of the disclosure further includes a floating plate 5, and the floating plate 5 is detachably connected with the foundation modules.

When the buoyancy of the foundation module needs to be increased, the floating plate 5 is connected with the foundation module to prevent the foundation module from touching the bottom. When a large buoyancy is not needed, the floating plate 5 is separated from the foundation module, so as to reduce the buoyancy of the floating foundation and ensure that the foundation module is located below the sea surface.

In the process of transporting the floating fan, the draft of the floating foundation can be adjusted by adjusting the ballast water of the foundation module and the floating plate 5. When the wind and waves are heavy, the draft can be made larger, and the force of waves on the floating foundation can be reduced to reduce the shaking. On the one hand, this method can reduce shaking and speed up towing transportation speed under the condition of certain wind and waves, on the other hand, transportation can also be realized under the condition of greater wind and waves, and the window period can be expanded.

During the use of the floating fan, if a part of the floating fan is damaged, it can be stabilized by using the floating plate 5, and a part can be disassembled in situ for replacement at the installation site without being dragged back to the port for overall replacement. In addition, all components of the unit, tower and foundation module can be disassembled in a modular way at the installation site and transported back to the port in a piecemeal way.

In this disclosure, the floating plate 5 is clamped with the foundation modules. Specifically, the floating plate 5 is provided with a first buckle 51 and a second buckle 52. In some embodiments, there are two first buckles 51, which are clamped with the second foundation module 2. The second buckle 52 is engaged with the third foundation module 3, thereby realizing the connection between the foundation module and the floating body 5.

It can be understood by those skilled in the art that the connection between the floating plate 5 and the foundation module includes but is not limited to clamping, and it can also be realized by using threaded connection.

It should be noted that the relative positions of the floating plate 5 and the foundation module include: the floating plate 5 is located above the foundation module or below the foundation module. If the floating plate 5 is located above the foundation module, the openings of the first buckle 51 and the second buckle 52 are both facing the foundation module. When the floating plate 5 is located below the foundation module, the openings of the first buckle 51 and the second buckle 52 also face the foundation module.

The connection mode of clamping is adopted, which is simple and easy to operate. When the floating plate 5 is separated from the foundation module, the clamping mode is also convenient for operation.

In some embodiments, in order to separate the floating plate 5 from the foundation module, water can be filled into the floating plate 5 or the foundation module, and the separation can be realized by increasing the weight of one of them.

Specifically, if the floating plate 5 is located above the foundation module, water can be injected into the foundation module to increase the weight of the foundation module, thus separating the floating plate 5 from the foundation module. If the floating plate 5 is located below the foundation module, water is injected into the floating plate 5 to increase the weight of the floating plate 5 until the floating plate 5 is separated from the foundation module.

In the embodiment of the disclosure, the weight of the floating plate 5 or the foundation module is changed by water injection, and the floating plate 5 and the foundation module are separated, so that the operation is simple and the operability is strong.

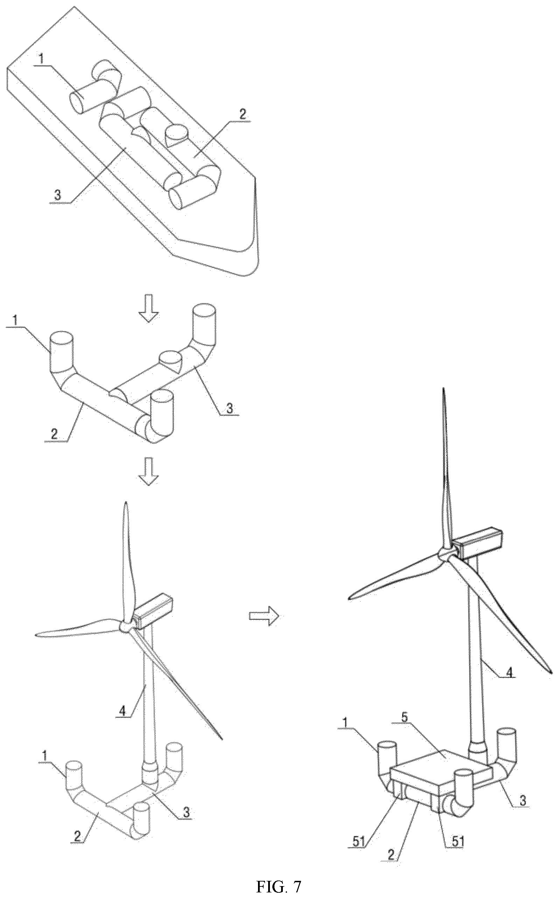

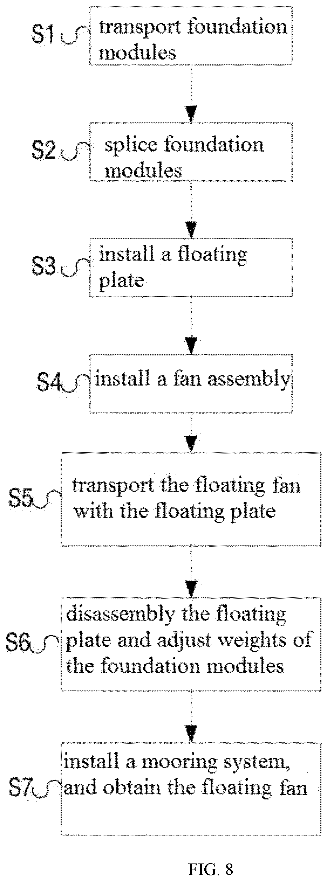

As shown in FIG. 7 and FIG. 8, in addition, the embodiment of the disclosure also provides a method for assembling a floating fan, which applies the floating foundation disclosed in the above embodiment and specifically includes the following steps.

S1: the foundation modules are transported;
the foundation module at least includes a first foundation module 1, a second foundation module 2 and a third foundation module 3; after the foundation module is installed by the production workshop, it will be transported to the installation dock by the production workshop.

S2, the foundation modules are spliced;
the foundation modules transported to the installation dock are spliced, and the first foundation module 1 is arranged in the first direction, the second foundation module 2 is arranged in the second direction, and the third foundation module 3 is arranged in the third direction;
the second foundation module 2 and the third foundation module 3 are located in the same plane, and a plane of the first foundation module 1 is higher than the plane where the second foundation module 2 and the third foundation module 3 are located; the middle of the second foundation module 2 and one end of the third foundation module 3 are connected in a T-shaped structure, and both ends of the second foundation module 2 and the other end of the third foundation module 3 are provided with the first foundation module 1.

S3: the floating plate is installed;
the floating plate 5 is detachably installed on the spliced foundation module; the first buckle 51 of the floating plate 5 is clamped with the second foundation module 2, and the second buckle 52 is clamped with the third foundation module 3;
the floating plate 5 may be installed above the foundation module or below the foundation module.

S4: the fan assembly is installed;
the fan assembly 4 is installed on the foundation module, and the fan assembly 4 is fixedly connected with the third foundation module 3 to obtain a floating fan with a floating plate 5 installed; due to the floating plate 5, the foundation module can be prevented from touching the bottom.

S5, the floating fan with the floating plate is transported;
the floating fan installed with the floating plate 5 is transported to the offshore fan installation site. In the process of transporting the floating fan, the draft of the floating foundation can be adjusted by adjusting the ballast water of the foundation module and the floating plate 5. When the wind and waves are heavy, the draft can be made larger, and the force of waves on the floating foundation can be reduced to reduce the shaking. On the one hand, this method can reduce shaking and speed up towing transportation speed under the condition of certain wind and waves, on the other hand, transportation can also be realized under the condition of greater wind and waves, and the window period can be expanded.

S6: the floating plate is disassembled and the weight of the foundation module is adjust;
if the floating plate 5 is installed above the foundation module, water is injected into the foundation module until the floating plate 5 is separated from the foundation module;
if the floating plate 5 is installed below the foundation module, water is injected into the floating plate 5 until the floating plate 5 is separated from the foundation module;
after the floating plate 5 is separated from the foundation module, water injection or pumping water is performed into the foundation module to make the foundation module reach the required ballast value; the specific number of ballast values can be set according to different needs.

S7: the mooring system is installed to obtain the floating fan;
the type of mooring system is not specifically limited here.

During the use of the floating fan, if a part of the floating fan is damaged, it can be stabilized by using the floating plate 5, and a part can be disassembled in situ for replacement at the installation site without being dragged back to the port for overall replacement.

As shown in the disclosure and claims, the words "a", "an", "one" and/or "the" do not refer to the singular, but may also include the plural, unless the context clearly indicates an exception. Generally speaking, the terms "including" and "containing" only imply the inclusion of clearly identified steps and elements, and these steps and elements do not constitute an exclusive list, and a method or device may also include other steps or elements. An element defined by the sentence "including a ..." does not exclude that there are other identical elements in the process, method, commodity or device including the element.

The various embodiments in this description are described in a progressive way, and each embodiment focuses on the differences from other embodiments, and the same and similar parts among the embodiments can only be referred to each other.

The above description of the disclosed embodiments enables those skilled in the art to make or use the disclosure. Many modifications to these embodiments will be obvious to those skilled in the art, and the general principles defined herein can be implemented in other embodiments without departing from the spirit or scope of the disclosure. Therefore, the disclosure is not to be limited to the embodiments shown herein, but is to be accorded the widest scope consistent with the principles and novel features disclosed herein.

## Claims

1. A floating foundation, comprising a plurality of foundation modules, wherein the plurality of foundation modules are spliced and connected, and the foundation modules at least comprise a first foundation module extending in a first direction, a second foundation module extending in a second direction and a third foundation module extending in a third direction after the plurality of foundation modules being spliced, wherein the second foundation module and the third foundation module are located in a same plane, and a plane of the first foundation module is higher than planes of the second foundation module and the third foundation module being located; the first direction, the second direction and the third direction form a three-dimensional coordinate system.

2. The floating foundation according to claim 1, wherein a middle of the second foundation module and one end of the third foundation module are connected into a T-shaped structure, and both ends of the second foundation module and an other end of the third foundation module are provided with the first foundation module.

3. The floating foundation according to claim 1, wherein further comprises a floating plate used for being detachably connected with the foundation modules.

4. The floating foundation according to claim 3, wherein the floating plate is connected above the foundation modules, or, the floating plate is connected below the foundation modules.

5. The floating foundation according to claim 3, wherein after one of the floating plate and the foundation modules is filled with water, the floating plate is separated from the foundation modules.

6. A method for assembling a floating fan, applying the floating foundation according to any one of claims 1 to 5, comprising:transporting foundation modules, wherein the foundation modules at least comprises a first foundation module, a second foundation module and a third foundation module, and the foundation modules are transported from a production workshop to an installation dock; splicing the foundation modules, splicing the foundation modules transported to the installation dock, wherein the first foundation module is arranged in a first direction, the second foundation module is arranged in a second direction, and the third foundation module is arranged in a third direction; installing a floating plate, wherein the floating plate is detachably installed on spliced foundation modules; installing a fan assembly, and installing the fan assembly on the foundation modules to obtain a floating fan with the floating plate; transporting the floating fan with the floating plate, and transporting the floating fan with the floating plate to an offshore fan installation site; disassembling the floating plate and adjusting weights of the foundation modules to obtain required ballast value; installing a mooring system to obtain the floating fan.

7. The method for assembling a floating fan according to claim 6, wherein the installing a floating plate comprises: the floating plate is detachably installed above the spliced foundation modules.

8. The method for assembling a floating fan according to claim 7, wherein the disassembling the floating plate comprises: injecting water into the foundation modules until the floating plate is separated from the foundation modules.

9. The method for assembling a floating fan according to claim 6, wherein the installing floating plate comprises: the floating plate is detachably installed below the spliced foundation modules.

10. The method for assembling a floating fan according to claim 9, wherein the disassembling the floating plate comprises: injecting water into the floating plate until the floating plate is separated from the foundation modules.
